# EUROPÄISCHE PATENTSCHRIFT

(11) **EP 4 051 893 B1**
(45) Veröffentlichungstag und Bekanntmachung des Hinweises auf die Patenterteilung: **04.03.2026**
(21) Anmeldenummer: 19798047.7
(22) Anmeldetag: 31.10.2019
(51) Int. Cl.: F02D 9/10, F02D 9/04

(54) **DROSSELKLAPPENVORRICHTUNG FÜR EINEN ABGASSTRANG ODER EINEN ZULUFTSTRANG EINES VERBRENNUNGSMOTOR**
THROTTLE VALVE DEVICE FOR AN EXHAUST SYSTEM OR A SUPPLY AIR SYSTEM OF AN INTERNAL COMBUSTION ENGINE
DISPOSITIF DE SOUPAPE D'ÉTRANGLEMENT POUR UN SYSTÈME D'ÉCHAPPEMENT OU UN SYSTÈME D'ALIMENTATION EN AIR D'UN MOTEUR À COMBUSTION INTERNE

(43) Veröffentlichungstag der Anmeldung: 07.09.2022
(73) Patentinhaber: Pierburg GmbH, 41460 Neuss (DE)
(72) Erfinder: GRAUTEN, Andreas, 41460 Neuss (DE); KAMARYS, Dirk, 41460 Neuss (DE); MICHELS, Jürgen, 41460 Neuss (DE)
(74) Vertreter: terpatent PartGmbB
(86) Internationale Anmeldenummer: PCT/EP2019/079852
(87) Internationale Veröffentlichungsnummer: WO 2021/083525

(56) Entgegenhaltungen:
- EP-A2- 1 243 774
- WO-A1-2008/144686
- WO-A1-2017/216241
- WO-A1-2021/037356
- US-A1- 2004 187 844
- US-A1- 2015 226 161

## Beschreibung

Die Erfindung betrifft eine Drosselklappenvorrichtung für einen Abgasstrang oder einen Zuluftstrang eines Verbrennungsmotor, mit einem Drosselklappengehäuse, welches ein einen Strömungskanal begrenzendes Innengehäuseelement und ein das Innengehäuseelement radial umgebendes Außengehäuseelement aufweist, wobei zwischen dem Außengehäuseelement und dem Innengehäuseelement ein Luftspalt vorgesehen ist, und einer Drosselklappe, welche im Strömungskanal angeordnet ist und über eine in den Strömungskanal ragende Klappenwelle schwenkbar am Drosselklappengehäuse gelagert ist.

Drosselklappenvorrichtungen für Verbrennungsmotoren sind aus dem Stand der Technik bekannt und werden in einem Zuluftstrang oder in einem Abgasstrang des Verbrennungsmotors vorgesehen. Die im Zuluftstrang angeordnete Drosselklappenvorrichtung dient beispielsweise zur Einstellung des Kraftstoff-Luft-Verhältnisses im Verbrennungsprozess des Verbrennungsmotors oder zur Einstellung einer Abgasrückführungsrate in den Verbrennungsmotor. Im Abgasstrang dient die Drosselklappenvorrichtung zur Beeinflussung von Schallemissionen und zur Beeinflussung des Staudrucks in dem Abgasstrang, wobei derartige Drosselklappenvorrichtungen auch als Akustikklappen bezeichnet werden.

Eine derartige Drosselklappenvorrichtung offenbart die WO 2017/216241 A1. Die Drosselklappenvorrichtung weist ein mehrteiliges Drosselklappengehäuse auf, welches ein Innengehäuseelement und ein das Innengehäuseelement radial umgebendes Außengehäuseelement aufweist. Das Innengehäuseelement begrenzt einen Strömungskanal, welcher beispielsweise mit den Abgasen des Verbrennungsmotors durchströmt wird. In dem Strömungskanal ist eine Drosselklappe angeordnet, welche an einer drehbaren Klappenwelle befestigt ist, wobei die drehbare Klappenwelle mit einem Aktor drehfest verbunden ist und über eine am Drosselklappengehäuse vorgesehene Öffnung in den Strömungskanal ragt. Durch die Betätigung des Aktors kann die Drosselklappe zwischen einer Offenstellung und einer Schließstellung verstellt werden, wobei die Drosselklappe in ihrer Schließstellung an einem am Innengehäuseelement vorgesehenen und in den Strömungskanal ragenden Klappenanschlag anliegt.

Das Innengehäuseelement und das Außengehäuseelement sind derart ausgeführt, dass zwischen der Außenumfangsfläche des Innengehäuseelements und der Innenumfangsfläche des Außengehäuseelements ein Luftspalt vorliegt, wobei ein derartiger Luftspalt zu einer Luftspaltisolation führt und dadurch eine Wärmeübertragung zwischen dem Strömungskanal und der Außenumgebung reduziert wird. Durch eine derartige Luftspaltisolation wird der Aktor vor einer thermischen Überhitzung geschützt.

Eine weitere Ausführungsform einer Klappenvorrichtung mit einem Innengehäuseelement, einem Außengehäuseelement und einem durch das Innengehäuseelement und das Außengehäuseelement radial begrenzten Luftspalt ist aus der US 2015/0226161 A1 bekannt. Im Bereich einer in einen durch das Innengehäuseelement begrenzten Strömungskanal ragenden Klappenwelle ist eine Hülse angeordnet, welche gemeinsam mit dem Außengehäuseelement eine Labyrinthdichtung zur Abdichtung in Längsrichtung der Klappenwelle bilden. Aus der EP 1 243 774 A2 und aus der WO 2021/037356 A1 sind weitere Ausführungen einer Klappenvorrichtung mit einem mit einem Innengehäuseelement bzw. einer Innenwandung, einem Außengehäuseelement bzw. einer Außenwandung und einem Luftspalt, welcher zwischen dem Innengehäuseelement und dem Außengehäuseelement bzw. zwischen der Innenwandung und der Außenwandung vorliegt, bekannt.

Eine unzureichende Abdichtung des Luftspalts gegenüber dem Strömungskanal führt zu einer Verminderung der Luftspaltisolation und ggfs. zu einer vollständigen Aufhebung der Luftspaltisolation, wobei bei einem hohen Leckagestrom des durch den Strömungskanal strömenden Gases in den Luftspalt sich im Luftspalt eine Temperatur einstellt, welche der Temperatur des durch den Strömungskanal strömende Gases entspricht.

Es stellt sich daher die Aufgabe, eine Drosselklappenvorrichtung bereitzustellen, welche eine Wärmeübertragung zwischen dem Strömungskanal und der Außenumgebung zuverlässig reduziert.

Diese Aufgabe wird durch eine Drosselklappenvorrichtung mit den Merkmalen des Hauptanspruchs 1 gelöst.

Dadurch, dass zwischen dem Innengehäuseelement und dem Außengehäuseelement ein koaxial zur Klappenwelle angeordneter Dichtring vorgesehen ist, wird die thermische Isolation des Strömungskanals gegenüber der Außenumgebung gewährleistet, indem ein Leckagestrom des durch das Drosselklappengehäuse strömenden Gases in den Luftspalt erheblich reduziert wird und damit die Luftspaltisolation des Strömungskanals gewährleistet wird.

Die Klappenwelle ragt durch sich überlagernde und am Innengehäuseelement und am Außengehäuseelement vorgesehene Öffnungen in den Strömungskanal, wobei diese sich überlagernden Öffnungen einen Leckagepfad zwischen dem Strömungskanal und dem Luftspalt verursachen. Der zwischen dem Innengehäuseelement und dem Außengehäuseelement und koaxial zur Klappenwelle angeordnete Dichtring dichtet den Luftspalt im Bereich der Klappenwelle derart vollständig gegenüber dem Strömungskanal ab, dass der durch die für die Klappenwelle vorgesehenen Öffnungen verursachte Leckagepfad geschlossen wird. Dabei liegt der Dichtring über eine erste Anlagefläche an einer Außenumfangsfläche des Innengehäuseelements und über eine zweite Anlagefläche an einer Innenumfangsfläche des Außengehäuseelements an.

Am Außengehäuseelement ist mindestens eine Lageraufnahmebuchse zur Aufnahme eines Klappenlagers vorgesehen, wobei die Lageraufnahmebuchse an einer dem Innengehäuseelement zugewandten Fläche eine ringförmige Nut aufweist, in welcher der Dichtring angeordnet ist, wobei der Dichtring an einer der ringförmigen Nut zugewandten Fläche des Innengehäuseelements anliegt. Auf diese Weise kann der Dichtring einfach und zuverlässig am Außengehäuseelement angeordnet werden, wobei ein unerwünschtes Verlagern des Dichtrings bei der Montage oder im Betrieb der Drosselklappenvorrichtung durch die Anordnung des Dichtrings in der ringförmigen Nut verhindert wird.

Vorzugsweise ist der Dichtring als eine Hochtemperaturdichtung ausgeführt, wobei der Dichtring vorzugsweise bis zu einer Temperatur des durch den Strömungskanals strömenden Gases von 1200 °C thermisch belastet werden kann. Dadurch kann die Luftspaltisolation auch bei hohen Temperaturen des Gases gewährleistet werden. Mit einer derartigen Dichtung kann die Drosselklappenvorrichtung als Abgasklappenvorrichtung verwendet werden.

In einer bevorzugten Ausgestaltung weist der Dichtring eine geringe Wärmeleitfähigkeit auf, wodurch eine Wärmeübertragung zwischen dem Innengehäuseelement und dem Außengehäuseelement und damit zwischen dem Strömungskanal und der Außenumgebung reduziert wird. Der am Innengehäuseelement und am Außengehäuseelement anliegende Dichtring überträgt nahezu keine Wärme zwischen dem Innengehäuseelement und dem Außengehäuseelement.

Vorzugsweise ist der Dichtring aus keramischen Fasern hergestellt, wobei der aus den keramischen Fasern hergestellte Dichtring bis zu einer Temperatur von 1200 °C des durch den Strömungskanal strömenden Gases eingesetzt werden kann und gleichzeitig eine geringe Wärmeleitfähigkeit aufweist.

In einer bevorzugten Ausgestaltung ist der Dichtring eine Stopfbuchse, wobei die Stopfbuchse als statische Dichtung eingesetzt wird, welche zur Abdichtung eines Spalts zwischen relativ zueinander nicht bewegenden Bauteilen dient. Die Stopfbuchsen werden beispielsweise aus Aramid-, Graphit-, PTFE- oder Keramikfasern hergestellt. Im eingebauten Zustand der Stopfbuchse wird diese zwischen zwei Bauteilen verpresst und dadurch die Dichtwirkung hergestellt. Durch die Ausführung des Dichtrings als Stopfbuchse können die Herstellungskosten der Drosselklappenvorrichtung reduziert werden, indem die Stopfbuchse einfach und kostengünstig hergestellt werden kann.

Vorzugsweise ist die Klappenwelle beidseitig am Drosselklappengehäuse gelagert, wobei die Klappenwelle sich durch zwei, sich überlagernde, erste Öffnungen am Innengehäuseelement und am Außengehäuseelement und durch zwei, sich überlagernde, zweite Öffnungen am Innengehäuseelement und Außengehäuseelement erstreckt, und wobei ein erster Dichtring zwischen dem Innengehäuseelement und dem Außengehäuseelement im Bereich der ersten Öffnungen angeordnet ist und ein zweiter Dichtring zwischen dem Innengehäuseelement und dem Außengehäuseelement im Bereich der zweiten Öffnungen angeordnet ist. In einer bevorzugten Ausgestaltung ist an der ersten Öffnung eine erste Lageraufnahmebuchse angeordnet und an der zweiten Öffnung ist eine zweite Lageraufnahmebuchse angeordnet. Durch die beidseitige Lagerung der Klappenwelle können insbesondere Biegungen der Klappenwelle zuverlässig verhindert werden und ein ordnungsgemäßer Betrieb der Drosselklappenvorrichtung gewährleistet werden. Durch die beiden Dichtringe kann der Luftspalt auch bei einer beidseitigen Lagerung der Klappenwelle zuverlässig gegenüber dem Strömungskanal abgedichtet werden.

Vorzugsweise weist die Lageraufnahmebuchse eine stufenartige Außenfläche auf, wobei die Lageraufnahmebuchse über eine erste Stufe der stufenartigen Außenfläche am Außengehäuseelement anliegt und über eine zweite Stufe der stufenartigen Außenfläche am Innengehäuseelement anliegt. Die erste Stufe weist einen größeren Durchmesser als die zweite Stufe auf. Im radial erstreckenden Bereich zwischen der ersten und der zweiten Stufe der stufenartigen Außenfläche ist vorzugsweise der Dichtring angeordnet, wobei der Dichtring am radial erstreckenden Bereich und an einer Außenumfangsfläche des Innengehäuseelements vorgespannt anliegt. Der Dichtring ist in Richtung der Klappenwellendrehachse und damit axial vorgespannt.

Vorzugsweise ist der Luftspalt ein durch das Innengehäuseelement und das Außengehäuseelement allseitig begrenzter Hohlraum, wodurch ein Einströmen des heißen und eines thermisch leitenden Stoffs zuverlässig verhindert wird und eine Luftspaltisolation gewährleistet wird.

Vorzugsweise sind das Innengehäuseelement und das Außengehäuseelement stoffschlüssig, vorzugsweise über eine Schweißverbindung, miteinander verbunden, wodurch eine zuverlässige und fluiddichte Verbindung zwischen dem Innengehäuseelement und dem Außengehäuseelement hergestellt wird. Durch die stoffschlüssige Verbindung kann eine Leckage des durch den Strömungskanal strömenden Gases in den Luftspalt zuverlässig verhindert werden und dadurch die thermische Isolation sichergestellt werden.

Vorzugsweise ist das Innengehäuseelement ausschließlich mit einem in Strömungsrichtung vor der Drosselklappe angeordneten axialen Ende mit dem Außengehäuseelement verschweißt. Dadurch kann die Leckage in den Luftspalt des durch den Strömungskanal strömenden Gases in den Luftspalt zuverlässig verhindert werden, wobei ein Einströmen des Gases an dem in Strömungsrichtung nach der Drosselklappe angeordneten axialen Ende durch die Strömung des Gases verhindert wird. Durch das Verschweißen des Innengehäuseelements mit dem Außengehäuseelement ausschließlich an einem axialen Ende können die Herstellungskosten des Drosselklappengehäuses reduziert werden. Außerdem wird dadurch ein unerwartetes Versagen der Schweißnähte zwischen dem Innengehäuseelement und dem Außengehäuseelement aufgrund unterschiedlicher Wärmedehnungen des Innengehäuseelements und des Außengehäuseelements verhindert.

In einer bevorzugten Ausgestaltung ist das Außengehäuseelement aus zwei Außengehäuse-Halbschalen hergestellt und das Innengehäuseelement ist aus zwei Innengehäuse-Halbschalen hergestellt. Dadurch kann der Dichtring auf eine einfache und kostengünstige Weise montiert werden, wobei im Montageprozess die Innengehäuse-Halbschalen zu einem Innengehäuseelement mit einem ringförmigen Querschnitt gefügt werden und anschließend die umgeformten Außengehäuse-Halbschalen über das gefügte Innengehäuseelement gestülpt, wobei der Dichtring nach dem Fügen des Innengehäuseelements und vor dem Zusammensetzen des Außengehäuseelements in den Luftspalt eingesetzt wird.

Durch die Ausgestaltung des Innengehäuseelements und des Außengehäuseelements aus Halbschalen können die Herstellung und die Montage des Drosselklappengehäuses vereinfacht werden. Die Herstellungskosten des Drosselklappengehäuses können derart reduziert werden, indem die Innengehäuse-Halbschalen und die Außengehäuse-Halbschalen aus kostengünstig herstellbaren Blechzuschnitten, beispielsweise aus rechteckigen Blechzuschnitten oder direkt von einem Coil, hergestellt werden und diese Blechzuschnitte in einem kostengünstigen Verfahren umgeformt, insbesondere tiefgezogen, werden.

Vorzugsweise sind die Innengehäuse-Halbschalen und/oder die Außengehäuse-Halbschalen stoffschlüssig, insbesondere über eine Schweißverbindung, miteinander verbunden, wodurch eine zuverlässige und fluiddichte Verbindung zwischen den Halbschalen hergestellt werden kann.

Es wird somit eine Drosselklappenvorrichtung für einen Abgasstrang oder einen Zuluftstrang eines Verbrennungsmotors geschaffen, bei welcher die thermische Isolation des Strömungskanals gegenüber der Außenumgebung gewährleistet wird, wobei der einfach und kostengünstig ausgeführte Dichtring den Luftspalt im Bereich der in den Strömungskanal hineinragenden Klappenwelle zwischen dem Außengehäuseelement und dem Innengehäuse abdichtet.

Ein Ausführungsbeispiel einer erfindungsgemäßen Drosselklappenvorrichtung für einen Abgasstrang oder einen Zuluftstrang eines Verbrennungsmotors wird in den Figuren dargestellt und nachfolgend beschrieben.
Figur 1 zeigt eine perspektivische Ansicht einer erfindungsgemäßen Drosselklappenvorrichtung, und
Figur 2 zeigt eine Querschnittansicht eines Drosselklappengehäuses der Drosselklappenvorrichtung aus Figur 1.

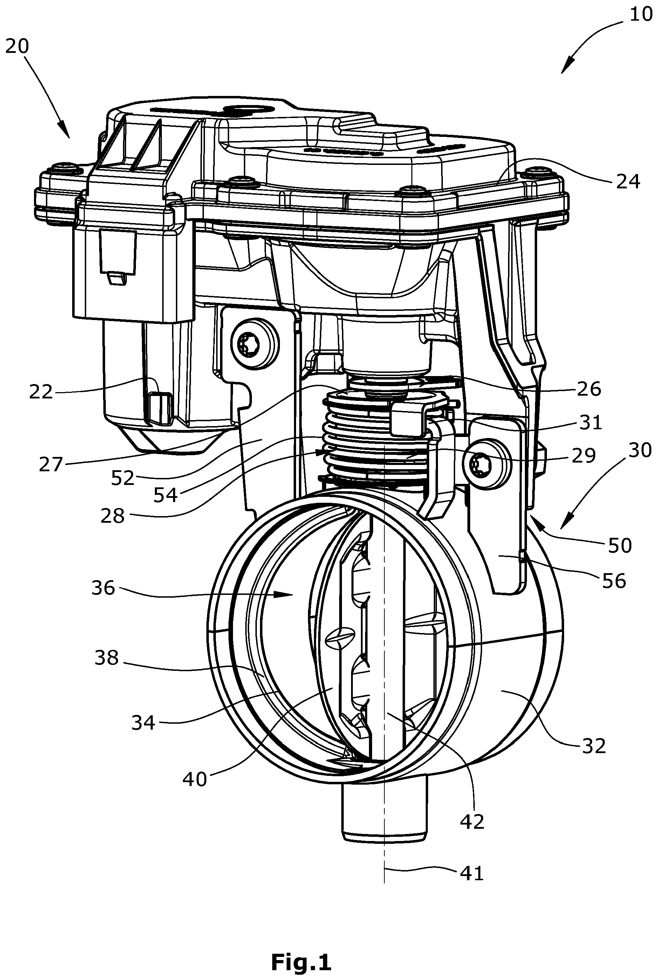

Die Figur 1 zeigt eine Drosselklappenvorrichtung 10 für einen Abgasstrang eines Verbrennungsmotors, wobei die Drosselklappenvorrichtung 10 ein Stellergehäuse 20 und ein Drosselklappengehäuse 30 umfasst. Das Stellergehäuse 20 ist mehrteilig ausgeführt und weist einen Gehäusegrundkörper 22 und einen mit dem Gehäusegrundkörper 22 verschraubten Deckel 24 auf, wobei der Gehäusegrundkörper 22 aus einem metallischen Werkstoff hergestellt ist und der Deckel 24 aus einem Kunststoff hergestellt ist. In dem Stellergehäuse 20 ist eine in den Figuren nicht gezeigte Antriebsvorrichtung mit einer dazugehörigen Elektronik angeordnet, wobei die Antriebsvorrichtung eine aus dem Stellergehäuse 20 ragende Stellerwelle 26 antreibt.

Das Drosselklappengehäuse 30 ist über eine Haltevorrichtung 50 am Gehäusegrundkörper 22 des Stellergehäuses 20 befestigt, wobei die Haltevorrichtung 50 mehrere Halteschenkel 52, 54, 56 aufweist, welche am Drosselklappengehäuse 30 fest angeordnet, beispielsweise angeschweißt, sind. Die am Drosselklappengehäuse 30 vorgesehenen Halteschenkel 52, 54, 56 sind über jeweils eine Schraube am Gehäusegrundkörper 22 befestigt.

In dem Drosselklappengehäuse 30 ist eine Drosselklappe 40 angeordnet, welche an einer um eine Drehachse 41 drehbar gelagerten Klappenwelle 42 befestigt ist. Die Klappenwelle 42 ist mit einem aus dem Drosselklappengehäuse 30 herausragenden Ende über eine Kupplung 28 mit dem aus dem Stellergehäuse 20 herausragenden Ende der Stellerwelle 26 drehfest verbunden.

Die Kupplung 28 ist von einer Feder 29, insbesondere einer Schenkelfeder, radial umgeben, wobei die Feder 29 mit einem ersten Schenkel mit dem Drosselklappengehäuse 30 und mit einem entgegengesetzten, zweiten Schenkel mit der Klappenwelle 42 fest verbunden. Die Verbindung der Feder 29 mit der Klappenwelle 42 erfolgt über ein plattenartiges und mit der Klappenwelle 42 drehfest verbundenes Übertragungselement 27.

Im eingebauten Zustand belastet die Feder 29 die Klappenwelle 42 in Umfangsrichtung derart, dass die Drosselklappe 40 bei einer inaktiven Antriebsvorrichtung in eine Fail-Safe-Position verdreht wird, wobei in der Fail-Safe-Position das Übertragungselement 27 an einem am Halteschenkel 56 und damit am Drosselklappengehäuse 30 vorgesehenen Anschlag 31 anliegt.

Des Weiteren wird die Feder 29 beim Montagevorgang axial gestaucht, wodurch die Feder 29 die Klappenwelle 42 axial belastet. Die Federkraft wirkt dabei in Richtung des Drosselklappengehäuses 30.

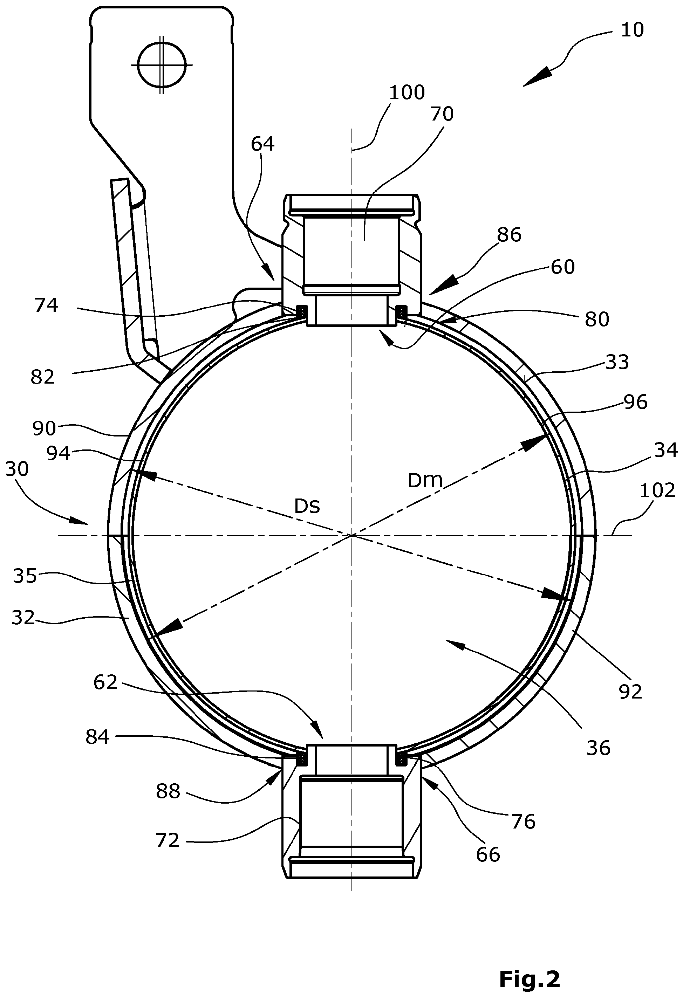

Die Figur 2 zeigt das Drosselklappengehäuse 30. Das Drosselklappengehäuse 30 ist doppelwandig ausgeführt und umfasst ein Außengehäuseelement 32 und ein Innengehäuseelement 34.

Das Innengehäuseelement 34 begrenzt radial einen Strömungskanal 36 und weist einen in Figur 1 gezeigten Klappenanschlag 38 auf, wobei die in dem Strömungskanal 36 angeordnete Drosselklappe 40 in ihre Schließstellung am Klappenanschlag 38 anliegt und den Strömungskanal 36 verschließt. Bei einer inaktiven Antriebsvorrichtung wird die Drosselklappe 40 durch die in Umfangsrichtung wirkenden Belastung der Feder 29 in ihre Offenstellung verstellt.

Das Außengehäuseelement 32 ist aus zwei Außengehäuse-Halbschalen 90, 92 hergestellt und das Innengehäuseelement 34 ist aus zwei Innengehäuse-Halbschalen 94, 96 hergestellt.

Die Außengehäuse-Halbschalen 90, 92 werden aus einem rechteckigen Blechausschnitt hergestellt und um durch ein Tiefziehverfahren in die jeweilige vordefinierte Form umgeformt, so dass die Außengehäuse-Halbschalen 90, 92 im montierten Zustand unter anderem ein Außengehäuseelement mit einem ringartigen Querschnitt bilden. In gleicher Weise werden auch die Innengehäuse-Halbschalen 94, 96 hergestellt.

Im Montageprozess des Drosselklappengehäuse 30 werden zunächst die Innengehäuse-Halbschalen 94, 96 in einer längs zur Drehachse 41 der Klappenwelle 42 und längs zu einer Längsachse des Strömungskanals 36 ausgerichteten Verbindungsebene 100 verschweißt. Im nächsten Schritt werden die Außengehäuse-Halbschalen 90, 92 über das bereits verschweißte Innengehäuseelement 34 gestülpt und in einer quer zur Drehachse der Klappenwelle 42 ausgerichteten Verbindungsebene 102 miteinander verschweißt. Anschließend wird das Innengehäuseelement 34 mit einem in Strömungsrichtung vor der Drosselklappe 40 angeordneten axialen Ende mit dem Außengehäuseelement 32 verschweißt, wodurch ein Einströmen des Abgases in den Luftspalt 80 verhindert wird.

Das Außengehäuseelement 32 liegt im endmontierten Zustand mit seiner Innenumfangsfläche 33 an der Außenumfangsfläche 35 des Innengehäuseelements 34 an, wobei die Innenumfangsfläche 33 und die Außenumfangsfläche 35 im Anlagebereich einen mittleren Durchmesser Dm aufweisen. Im axial mittleren Bereich des Drosselklappengehäuses 30 weist die Innenumfangsfläche 33 des Außengehäuseelements 32 einen im Vergleich zum mittleren Durchmesser Dm größeren Durchmesser Ds auf. Durch den vergrößerten Durchmesser Ds entsteht ein umlaufender und allseitig durch das Außengehäuseelement 32 und das Innengehäuseelement 34 begrenzter Luftspalt 80. Der Luftspalt 80 dient der thermischen Isolation zwischen dem Strömungskanal 36 und der Außenumgebung und somit zwischen dem Strömungskanal 36 und dem Stellergehäuse 20.

Das Innengehäuseelement 34 und das Außengehäuseelement 32 weisen jeweils zwei, sich gegenüberliegende Öffnungen 60, 62, 64, 66 auf, wobei sich die am Innengehäuseelement 34 vorgesehenen Öffnungen 60, 62 und die am Außengehäuseelement 32 vorgesehenen Öffnungen 64, 66 überlagern und sich die Klappenwelle 42 durch die Öffnungen 60, 62, 64, 66 erstreckt. In den Öffnungen 64, 66 des Außengehäuseelements 32 ist jeweils eine Lageraufnahmebuchse 70, 72 vorgesehen, wobei in den Lageraufnahmebuchsen 70, 72 jeweils ein in den Figuren nicht gezeigtes Klappenwellen-Lager und eine Abdichtfläche vorgesehen sind. Durch die axiale Vorspannung der Klappenwelle 42 durch die Feder 29 wird die Abdichtfläche gegen eine Gegendichtfläche gedrückt. Das Klappenwellen-Lager ist als Gleitlager, beispielsweise als Gleitlagerhülse, ausgeführt. Alternativ kann das Klappenwellenlager als Wälzlager ausgebildet sein.

Hierbei kann die axiale Vorspannung der Klappenwelle zur axialen Vorspannung der Wälzlager genutzt werden.

Die Lageraufnahmebuchsen 70, 72 weisen an ihrem dem Strömungskanal 36 zugewandten Ende eine stufenartige Außenfläche 86, 88 auf, wobei die Lageraufnahmebuchse 70, 72 über eine erste Stufe mit einem größeren Durchmesser am Außengehäuseelement 32 radial anliegt und über eine zweite Stufe mit einem relativ zur ersten Stufe kleineren Durchmesser am Innengehäuseelement 34 anliegt. Radial zwischen den beiden Stufen der stufenartigen Außenfläche 86, 88 weisen die Lageraufnahmebuchsen 70, 72 jeweils eine axial erstreckende, ringförmige Nut 74, 76 auf. In den ringförmigen Nuten 74, 76 ist jeweils ein Dichtring 82, 84 angeordnet, wobei die Dichtringe 82, 84 mit ihren der ringförmigen Nut 74, 76 abgewandten Flächen an der Außenumfangsfläche 35 des Innengehäuseelements 34 anliegen.

Die ringförmigen Nuten 74, 76 und die Dichtringe 82, 84 sind koaxial zur Klappenwelle 42 und damit in einem unmittelbar an die Öffnungen 60, 62, 64, 66 angrenzenden Bereich angeordnet, wodurch der Luftspalt 80 durch die Dichtringe 82, 84 unmittelbar an den Öffnungen 60, 62, 64, 66 gegenüber dem Strömungskanal 36 abgedichtet ist.

Die Dichtringe 82, 84 sind zur Verwendung der Drosselklappenvorrichtung 10 in einem Abgasstrang als Hochtemperaturdichtungen ausgeführt. Des Weiteren weisen die Dichtringe 82, 84 eine geringe Wärmeleitfähigkeit auf, um eine Wärmeübertragung zwischen dem Innengehäuseelement 34 und dem Außengehäuseelement 32 möglichst gering zu halten. Folglich sind die Dichtringe 82, 84 durch eine Stopfbuchse aus keramischen Fasern ausgeführt, wobei eine derartige Stopfbuchse aus keramischen Fasern bei hohen Temperaturen, nämlich bei bis zu 1200 °C, eingesetzt werden kann und eine geringe Wärmeleitfähigkeit aufweist.

Es wird somit eine Drosselklappenvorrichtung 10 für einen Abgasstrang oder einen Zuluftstrang eines Verbrennungsmotors geschaffen, bei welcher die thermische Isolation des Strömungskanals 36 gegenüber der Außenumgebung gewährleistet wird, wobei der einfach und kostengünstig ausgeführte Dichtring 82, 84 den Luftspalt 80 im Bereich der in den Strömungskanal 36 hineinragenden Klappenwelle 42 zwischen dem Außengehäuseelement 32 und dem Innengehäuseelement 34 zuverlässig abdichtet.

Es sollte deutlich sein, dass der Schutzbereich nicht auf das beschriebene Ausführungsbeispiel beschränkt ist, sondern verschiedene Modifikationen denkbar sind. So kann beispielsweise das Innen- und das Außengehäuseelement 32, 34 oder die Drosselklappe 40 anders ausgeführt sein.

## Patentansprüche

1. Drosselklappenvorrichtung für einen Abgasstrang oder einen Zuluftstrang eines Verbrennungsmotor, mit
einem Drosselklappengehäuse (30), welches ein einen Strömungskanal (36) begrenzendes Innengehäuseelement (34) und ein das Innengehäuseelement (34) radial umgebendes Außengehäuseelement (32) aufweist, wobei zwischen dem Außengehäuseelement (32) und dem Innengehäuseelement (34) ein Luftspalt (80) vorgesehen ist, und
einer Drosselklappe (40), welche im Strömungskanal (36) angeordnet ist und über eine in den Strömungskanal (36) ragende Klappenwelle (42) schwenkbar am Drosselklappengehäuse (30) gelagert ist,
**dadurch gekennzeichnet, dass**
zwischen dem Innengehäuseelement (34) und dem Außengehäuseelement (32) ein koaxial zur Klappenwelle (42) angeordneter Dichtring (82, 84) vorgesehen ist, wobei am Außengehäuseelement (32) mindestens eine Lageraufnahmebuchse (70, 72) zur Aufnahme eines Klappenlagers vorgesehen ist, wobei die Lageraufnahmebuchse (70, 72) an einer dem Innengehäuseelement (34) zugewandten Fläche eine ringförmige Nut (74, 76) aufweist, in welcher der Dichtring (82, 84) angeordnet ist, wobei der Dichtring (82, 84) an einer der ringförmigen Nut (74, 76) zugewandten Fläche des Innengehäuseelements (34) anliegt.

2. Drosselklappenvorrichtung nach Anspruch 1,
**dadurch gekennzeichnet, dass**
der Dichtring (82, 84) als Hochtemperaturdichtung ausgeführt ist.

3. Drosselklappenvorrichtung nach Anspruch 1 oder 2,
**dadurch gekennzeichnet, dass**
der Dichtring (82, 84) eine geringe Wärmeleitfähigkeit aufweist.

4. Drosselklappenvorrichtung nach Anspruch 2 und 3,
**dadurch gekennzeichnet, dass**
der Dichtring (82, 84) aus keramischen Fasern hergestellt ist.

5. Drosselklappenvorrichtung nach einem der vorhergehenden Ansprüche,
**dadurch gekennzeichnet, dass**
der Dichtring (82, 84) eine Stopfbuchse ist.

6. Drosselklappenvorrichtung nach einem der vorhergehenden Ansprüche,
**dadurch gekennzeichnet, dass**
die Klappenwelle (42) beidseitig am Drosselklappengehäuse (30) gelagert ist, wobei die Klappenwelle (42) sich durch zwei, sich überlagernde, erste Öffnungen (60, 64) am Innengehäuseelement (34) und am Außengehäuseelement (32) und durch zwei, sich überlagernde, zweite Öffnungen (62, 66) am Innengehäuseelement (34) und Außengehäuseelement (32) erstreckt, und wobei ein erster Dichtring (82) zwischen dem Innengehäuseelement (34) und dem Außengehäuseelement (32) im Bereich der ersten Öffnungen (60, 64) angeordnet ist und ein zweiter Dichtring (84) zwischen dem Innengehäuseelement (34) und dem Außengehäuseelement (32) im Bereich der zweiten Öffnungen (62, 66) angeordnet ist.

7. Drosselklappenvorrichtung nach einem der vorhergehenden Ansprüche,
**dadurch gekennzeichnet, dass**
an der ersten Öffnung (60) eine erste Lageraufnahmebuchse (70) angeordnet ist und an der zweiten Öffnung (62) eine zweite Lageraufnahmebuchse (72) angeordnet ist.

8. Drosselklappenvorrichtung nach einem der vorhergehenden Ansprüche,
**dadurch gekennzeichnet, dass**
die Lageraufnahmebuchse (70, 72) eine stufenartige Außenfläche aufweist, wobei die Lageraufnahmebuchse (70, 72) über eine erste Stufe der stufenartigen Außenfläche am Außengehäuseelement (32) anliegt und über einer zweiten Stufe der stufenartigen Außenfläche am Innengehäuseelement (34) anliegt.

9. Drosselklappenvorrichtung nach einem der vorhergehenden Ansprüche,
**dadurch gekennzeichnet, dass**
der Luftspalt (80) ein durch das Innengehäuseelement (34) und das Außengehäuseelement (32) allseitig begrenzter Hohlraum ist.

10. Drosselklappenvorrichtung nach einem der vorhergehenden Ansprüche,
**dadurch gekennzeichnet, dass**
das Innengehäuseelement (34) und das Außengehäuseelement (32) stoffschlüssig miteinander verbunden sind.

11. Drosselklappenvorrichtung nach Anspruch 10,
**dadurch gekennzeichnet, dass**
das Innengehäuseelement (34) ausschließlich mit einem in Strömungsrichtung vor der Drosselklappe (40) angeordneten axialen Ende mit dem Außengehäuseelement (32) verschweißt ist.

12. Drosselklappenvorrichtung nach einem der vorhergehenden Ansprüche,
**dadurch gekennzeichnet, dass**
das Außengehäuseelement (32) aus zwei Außengehäuse-Halbschalen (90, 92) hergestellt ist und das Innengehäuseelement (34) aus zwei Innengehäuse-Halbschalen (94,96) hergestellt ist.

13. Drosselklappenvorrichtung nach Anspruch 12,
**dadurch gekennzeichnet, dass**
die Innengehäuse-Halbschalen (94, 96) und/oder die Außengehäuse-Halbschalen (90, 92) stoffschlüssig miteinander sind.

## Claims

1. A throttle valve device for an exhaust system or a supply air system of an internal combustion engine, with
a throttle valve housing (30) which has an inner housing element (34), which delimits a flow duct (36), and an outer housing element (32), which radially surrounds the inner housing element (34), an air gap (80) being provided between the outer housing element (32) and the inner housing element (34), and
a throttle valve (40), which is situated in the flow duct (36) and is mounted pivotably on the throttle valve housing (30) via a valve shaft (42) projecting into the flow duct (36),
**characterized in that**
a sealing ring (82, 84), which is arranged coaxially to the valve shaft (42), is provided between the inner housing element (34) and the outer housing element (32), wherein on the outer housing element (32) at least one bearing receiving bush (70, 72) is provided for receiving a valve bearing, wherein the bearing receiving bush (70, 72) has on a surface facing the inner housing element (34) an annular groove (74, 76), in which the sealing ring (82, 84) is arranged, wherein the sealing ring (82, 84) lies on a surface of the inner housing element (34) facing the annular groove (74, 76).

2. The throttle valve device according to Claim 1,
**characterized in that**
the sealing ring (82, 84) is embodied as a high temperature seal.

3. The throttle valve device according to Claim 1 or 2,
**characterized in that**
the sealing ring (82, 84) has a low thermal conductivity.

4. The throttle valve device according to Claim 2 and 3,
**characterized in that**
the sealing ring (82, 84) is produced from ceramic fibres.

5. The throttle valve device according to one of the preceding claims,
**characterized in that**
the sealing ring (82, 84) is a stuffing box.

6. The throttle valve device according to one of the preceding claims,
**characterized in that**
the valve shaft (42) is mounted on both sides on the throttle valve housing (30), wherein the valve shaft (42) extends through two first openings (60, 64), overlapping each other, on the inner housing element (34) and on the outer housing element (32), and by two second openings (62, 66), overlapping each other, on the inner housing element (34) and outer housing element (32), and wherein a first sealing ring (82) is arranged between the inner housing element (34) and the outer housing element (32) in the region of the first openings (60, 64), and a second sealing ring (84) is arranged between the inner housing element (34) and the outer housing element (32) in the region of the second openings (62, 66).

7. The throttle valve device according to one of the preceding claims,
**characterized in that**
a first bearing receiving bush (70) is arranged at the first opening (60), and a second bearing receiving bush (72) is arranged at the second opening (62).

8. The throttle valve device according to one of the preceding claims,
**characterized in that**
the bearing receiving bush (70, 72) has a steplike outer surface, wherein the bearing receiving bush (70, 72) lies via a first step of the steplike outer surface on the outer housing element (32), and lies via a second step of the steplike outer surface on the inner housing element (34).

9. The throttle valve device according to one of the preceding claims,
**characterized in that**
the air gap (80) is a cavity delimited on all sides by the inner housing element (34) and the outer housing element (32).

10. The throttle valve device according to one of the preceding claims,
**characterized in that**
the inner housing element (34) and the outer housing element (32) are connected to one another in a materially bonded manner.

11. The throttle valve device according to Claim 10,
**characterized in that**
the inner housing element (34) is welded with the outer housing element (32) exclusively with an axial end arranged in flow direction before the throttle valve (40).

12. The throttle valve device according to one of the preceding claims,
**characterized in that**
the outer housing element (32) is produced from two outer housing half shells (90, 92), and the inner housing element (34) is produced from two inner housing half-shells (94, 96).

13. The throttle valve device according to Claim 12,
**characterized in that**
the inner housing half-shells (94, 96) and/or the outer housing half-shells (90, 92) are connected to one another in a materially bonded manner.

## Revendications

1. Dispositif de soupape d'étranglement pour une ligne d'air d'échappement ou une ligne d'air d'alimentation d'un moteur à combustion interne, avec
un boîtier (30) de soupape d'étranglement, qui présente un élément de boîtier intérieur (34) délimitant un canal d'écoulement (36) et un élément de boîtier extérieur (32) entourant radialement l'élément de boîtier intérieur (34), dans lequel un entrefer (80) est prévu entre l'élément de boîtier extérieur (32) et l'élément de boîtier intérieur (34), et
une soupape d'étranglement (40), qui est disposée dans le canal d'écoulement (36) et est montée sur le boîtier de soupape d'étranglement (30) de manière à pouvoir pivoter par l'intermédiaire d'un arbre de soupape (42) dépassant dans le canal d'écoulement (36),
**caractérisé en ce que**
une bague d'étanchéité (82, 84) disposée coaxialement par rapport à l'arbre de soupape (42) est prévue entre l'élément de boîtier intérieur (34) et l'élément de boîtier extérieur (32), dans lequel l'élément de boîtier extérieur (32) présente au moins une douille de réception de palier (70, 72) pour recevoir un palier de soupape, dans lequel la douille de réception de palier (70, 72) présente, sur une surface tournée vers l'élément de boîtier intérieur (34), une rainure annulaire (74, 76) dans laquelle la bague d'étanchéité (82, 84) est disposée, dans lequel la bague d'étanchéité (82, 84) repose sur une surface de l'élément de boîtier intérieur (34) tournée vers la rainure annulaire (74, 76).

2. Dispositif de soupape d'étranglement selon la revendication 1,
**caractérisé en ce que**
la bague d'étanchéité (82, 84) est réalisée comme un joint d'étanchéité haute température.

3. Dispositif de soupape d'étranglement selon la revendication 1 ou 2,
**caractérisé en ce que**
la bague d'étanchéité (82, 84) présente une faible conductivité thermique.

4. Dispositif de soupape d'étranglement selon les revendications 2 et 3,
**caractérisé en ce que**
la bague d'étanchéité (82, 84) est fabriquée en fibres céramiques.

5. Dispositif de soupape d'étranglement selon l'une quelconque des revendications précédentes,
**caractérisé en ce que**
la bague d'étanchéité (82, 84) est un presse-étoupe.

6. Dispositif de soupape d'étranglement selon l'une quelconque des revendications précédentes,
**caractérisé en ce que**
l'arbre de soupape (42) est monté des deux côtés sur le boîtier de soupape d'étranglement (30), dans lequel l'arbre de soupape (42) s'étend à travers deux premières ouvertures (60, 64) superposées dans l'élément de boîtier intérieur (34) et l'élément de boîtier extérieur (32), ainsi qu'à travers deux deuxièmes ouvertures (62, 66) superposées sur l'élément de boîtier intérieur (34) et l'élément de boîtier extérieur (32), et dans lequel une première bague d'étanchéité (82) est disposée entre l'élément de boîtier intérieur (34) et l'élément de boîtier extérieur (32) dans la zone des premières ouvertures (60, 64) et une deuxième bague d'étanchéité (84) est disposée entre l'élément de boîtier intérieur (34) et l'élément de boîtier extérieur (32) dans la zone des deuxièmes ouvertures (62, 66).

7. Dispositif de soupape d'étranglement selon l'une quelconque des revendications précédentes,
**caractérisé en ce que**
une première douille de réception de palier (70) est disposée sur la première ouverture (60) et une deuxième douille de réception de palier (72) est disposée sur la deuxième ouverture (62).

8. Dispositif de soupape d'étranglement selon l'une quelconque des revendications précédentes,
**caractérisé en ce que**
la douille de réception de palier (70, 72) présente une surface extérieure en gradins, dans lequel la douille de réception de palier (70, 72) repose sur l'élément de boîtier extérieur (32) par l'intermédiaire d'un premier gradin de la surface extérieure en gradins et sur l'élément de boîtier intérieur (34) par l'intermédiaire d'un deuxième gradin de la surface extérieure en gradins.

9. Dispositif de soupape d'étranglement selon l'une quelconque des revendications précédentes,
**caractérisé en ce que**
l'entrefer (80) est une cavité délimitée de toutes parts par l'élément de boîtier intérieur (34) et l'élément de boîtier extérieur (32).

10. Dispositif de soupape d'étranglement selon l'une quelconque des revendications précédentes,
**caractérisé en ce que**
l'élément de boîtier intérieur (34) et l'élément de boîtier extérieur (32) sont reliés l'un à l'autre par liaison de matière.

11. Dispositif de soupape d'étranglement selon la revendication 10,
**caractérisé en ce que**
l'élément de boîtier intérieur (34) est soudé à l'élément de boîtier extérieur (32) exclusivement par une extrémité axiale disposée dans le sens d'écoulement en amont de la soupape d'étranglement (40).

12. Dispositif de soupape d'étranglement selon l'une quelconque des revendications précédentes,
**caractérisé en ce que**
l'élément de boîtier extérieur (32) est fabriqué à partir de deux demi-coques de boîtier extérieur (90, 92) et l'élément de boîtier intérieur (34) est fabriqué à partir de deux demi-coques de boîtier intérieur (94, 96).

13. Dispositif de soupape d'étranglement selon la revendication 12,
**caractérisé en ce que**
les demi-coques de boîtier intérieur (94, 96) et/ou les demi-coques de boîtier extérieur (90, 92) sont reliées les unes aux autres par liaison de matière.
